Europäisches Patentamt

European Patent Office

Office européen des brevets

(19)

(11) Publication number: **0 059 532**
**A2**

# (12) EUROPEAN PATENT APPLICATION

(21) Application number: 82300495.7

(22) Date of filing: 29.01.82

(51) Int. Cl.³: **G 07 F 7/08**
**H 04 N 7/04**

(30) Priority: 30.01.81 GB 8102839

(43) Date of publication of application:
08.09.82 Bulletin 82/36

(84) Designated Contracting States:
AT BE CH DE FR GB IT LI LU NL SE

(71) Applicant: Chalmers, David Arthur
75 Gordon Road
London N3 1ER(GB)

(71) Applicant: Halpern, John Wolfgang
14 Belsize Park Gardens
London, NW3 4LO,(GB)

(71) Applicant: Ward, William
14 Belsize Park Gardens
London, NW3 4LO(GB)

(72) Inventor: Chalmers, David Arthur, B Sc.
75 Gordon Road Finchley Central
London, N.3(GB)

(74) Representative: Newstead, Michael John et al,
Haseltine Lake & Co. 28 Southampton Buildings
Chancery Lane
London, WC2A 1AT(GB)

(54) Card data validity checker.

(57) The combination of a receiver of T.V. radiation with a card reader to enable centrally disseminated lists of lost or stolen cards to be instantly compared with every card checked into the card reader. The idea is to utilize one of the frame lines which are normally outside the picture area for encoding identity numbers of cards reported lost. A detail description of how this can be realized is given. The effect of this invention is a decisive shortening of the interval between the loss of a card and the moment when instructions reach the large number of sales points. Equally improved would be the speed in eliminating card numbers from the stop list once they are recovered by their owners.

Fig. 1

The present invention relates to improved means of distributing the identification numbers of cards reported lost or stolen from a central agency to the point of sale locations on a country-wide scale.

Banks and Credit Card companies are known to suffer considerable losses from fraudulently or improperly used cards. Because of the large number of cards which at any one time are reported lost or stolen it is not practicable to telephone the card numbers to the equally large number of sales points. Lists of invalid cards take a relatively long time to distribute; those in illegal possession of cards have, therefore, ample time for obtaining goods or services illegally.

This application describes a device for reducing this delay to a matter of a few minutes, and for providing means by which a sales person may instantly determine the validity of any credit card or pay token proffered.

The device consists of three parts.
Firstly, an electromagnetic radiation detection and amplifying device suitable for receiving the radiations associated with the broadcasting of public service programmes, radio or television. The device ignores the bulk of the service transmission but selects, by well established methods, specially coded signals which after recognition by electronic circuit means announce that, immediately following at exactly specified time intervals, the suitably encoded identification numbers of cards are going to be received.
Secondly, these last-mentioned received signals which relate to card identification numbers are stored in an electronic or magnetic store.
Thirdly, the stored numbers are compared with identification numbers of each card presented to the sales terminal. Number entry may be either manual or automatic, and if an exact likeness is found an audible and/or visual alarm signal is generated to indicate that the card just being presented is invalid.  In automatic terminals  the intended transaction is inhibited. The automatic reading of cards may be carried out in a number of ways consistent with the type of card used, e.g. magnetic strip, punched hole, laser erased, solid statememory cards.

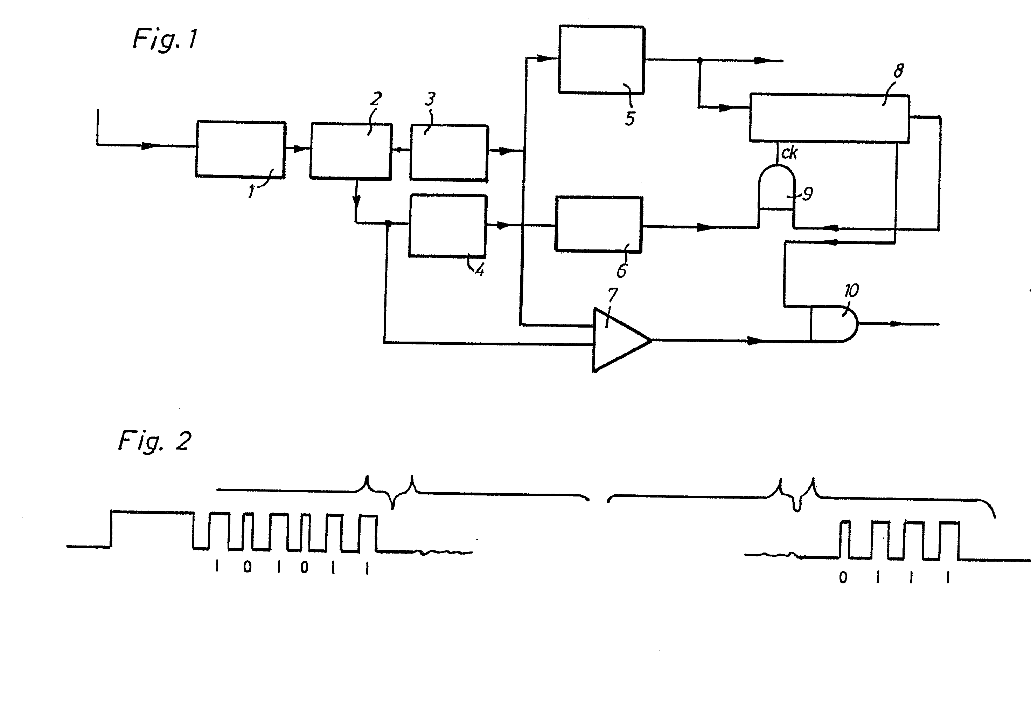

A more detailed description of one embodiment of the invention using television transmissions will now be given with reference to figs. 1,2 & 3. Firstly Figure 1: A suitable television aerial is used to collect the radiated signals;the latter are amplified and have their carrier frequency changed in circuit block (1). Further amplification takes place in the intermediate frequency stage (2). The signal is then rectified in stage (3) and part of the resultant output signal is passed through a filter stage (4) and then used as a feedback signal to control the gain of the intermediate amplifier (2). The rectified signal derived from stage (3) is input to both a frame sync. separator (5)  and a line sync. separator (6). All the stages so far described are essentially the same as those used in any conventional television receiver. The frame pulse is used to reset an electronic counter stage (8) which then counts the line pulses until a certain number is reached when a signal is given out by the counter to inhibit the line sync pulses in gate (9). During the preceding line pulse a signal is given out by the counter lasting for the period of one line and is an input to an 'AND' gate (10).  The detector signal from (3) is also input to a level discriminator stage (7) which gives out a positive voltage if the signal is above 50% of the peak white signal, but if the signal level is below that percentage, the output will be zero volts. The output of stage (7) is also input to'AND' gate (10).

The resultant output of this arrangement is shown in Fig. 2 and consists of a signal lasting for one T.V. line and occuring at a fixed line number corresponding to the maximum count of line counter (8) and repeated each frame. This signal is originally transmitted in coded form and so constituted that it may easily be decoded and correctly interpreted even in the presence of electrical or electro-magnetic noise. The first part of the coded signal is a pulse lasting longer than any other that occurs in the sequence ( the bit sync pulse ). The remaining pulses occur at regular intervals with the pulse lengths having two values, the longer pulses representing a binary 1 and the shorter pulses representing a binary 0. These pulses are conveniently described in four sets.

The first set consists of a fixed number of pulses representing in coded form the address of that part of the store into which the data is to be entered. The second set of pulses is exactly the same as the first set. The third set of pulses consists of a fixed number of pulses representing the identification number of a known invalid card or token. The fourth set of pulses is exactly the same as the third.

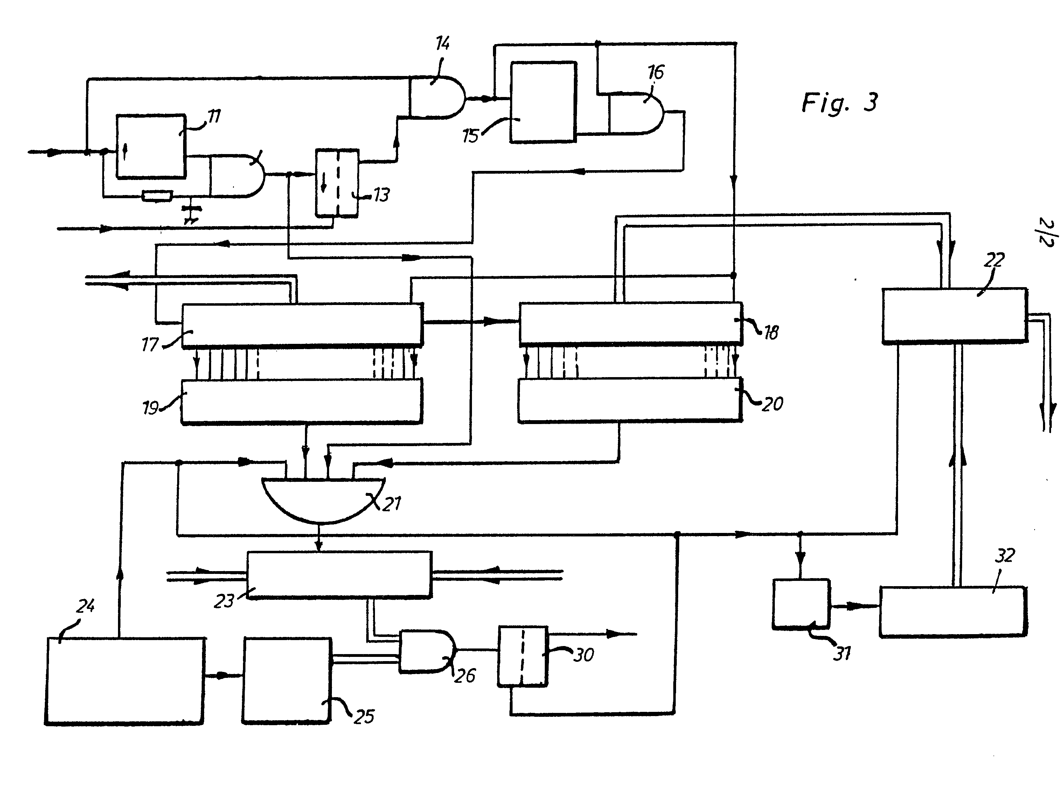

Referring to Fig. 3, the pulses from gate (10) of fig. 2 are input to a monostable circuit (11) whose period is approximately 0.75 of the bit sync.pulse and the monostable period is triggered by the positive going part of the bit sync pulse. When the end of the monostable period is reached its output goes positive and together with the delayed input signal ( delayed by R and C ) are input to the 'AND' gate (12). The resultant positive pulse sets a bistable (13) whose output is input, conjointly with the fig. 3 INPUT signal, to an 'AND' gate (14). Its output is input to a monostable (15) which is triggered by the positive going edge and whose period is approximately0.75 of the period of the pulse representing a binary 1. (15) produces a negative going output pulse applied to 'AND' gate (16) together with the input to (15). The resultant output is a pulse corresponding to a trans-

- 4 -    0059532

The resultanet output is a pulse corresponding to a transmitted binary 1. These pulses are input to block (17) which is a shift register. The shifting of the register is done by the output of (14) during the negative going edge. The output of the shift regtister (17) is input to a second shift register (18). When both shift registers are full, there are two equal sets of data (the identification number) stored in register (17) and two sets of data ( the address ) stored in register (18). The Comparator (19) compares the two section of the data in (17) and if they are found to be identical gives an output signal applied to 'AND' gate 21. Comparator (2) compares the two sections of the data in (18) and if they are found to be identical also gives an output signal applied to 'AND' gate (21). When the next bit sync pulse is detected the output of 'And' gate (12) which is one of the inputs to 'And'gate 21 is used to produce a short ENABLE pulse to store (23) enabling said store to accept the paralell data input bits and take them in storage at the address indicated by the paralell address input bits.

If,however, a card is being read in the card reader (24) until the read operation is completed and the signals thus generated are as required re-coded in unit (25). Thereafter Gate (21) is enabled by unit 24 and both the data of store (23) and of decoder (25) are applied to 'AND' gates (26) from which an output signal is obtained only if a l l the corresponding data bits are equal. The store (23) contains a continually updated list of all the card numbers which at a given instant remain impeached. With the aid of the counter (32) all the available addresses of the store (23) are cycled through at a fast clockrate. During this scanning period, address instructions from shift register (18) are not accepted.in multiplex circuit (22) but if required may be held in a buffer store ( not shown ).

**0059532**

If a card number agrees with one of the numbers held in store (23) the comparator produces an output which triggers bistable (3) which sets an alarm signal.  Bistable (30) is reset when the card is removed from the reader. The bistable (13) is reset by each frame pulse.

C L A I M S

1. A system for communicating the identifying data of lost
   or stolen credit cards or pay tokens to a large number
   of point of sale locations via a TV channel,
   characterized in that it utilises a single scanning
   line for transmitting encoded address and identifying
   data and that at least one card checking station is equipped with a device connected to a TV antenna or coaxial line for receiving, converting and detecting the
   said encoded data contained in the said single TV scanning line, said device further connected to a store for
   the purpose of placing all data thus received into said
   store, and for subjecting the accummulated contents  of
   said store to a scanning operation whenever a card is
   presented to the card checking station.

2. A system for communicating the identifying data of
   lost or stolen credit cards or pay tokens to a large
   number of point of sale locations via a TV channel as
   in Claim 1  w h e r e i n  said device at the card
   checking station comprises, or is connected to, a manual
   data encoder terminal for manually entering the identifying number of a card or pay token into said store,
   means for generating a string of identiying data belonging to cards reported lost or stolen, means for comparing the identifying data of lost cards with manually
   encoded and stored data presented to a card checking
   station, and an alarm signal generator enabled when congruence of any said data is detected.

3. A system for communicating the identifying data of lost or stolen credit cards or pay tokens to a large number of point of sale locations via a TV channel as in Claim 1 w h e r e i n said device at the said card checking station comprises, or is connected to, an automatic card reader unit which reads the identifying data on the card presented to a card checking station, a store for receiving said card data, a scanning device which scans and produces a string of data belonging to cards reported lost or stolen, a comparator which consecutively compares at a high data rate the aforementioned card data obtained from said card reader and from the lost card data store, and an alarm signal generator enabled when congruence of any said data is detected.

Fig. 1

Fig. 2

Fig. 3

2/2

0059532